# EUROPEAN PATENT SPECIFICATION

(11) **EP 2 448 159 B1**
(45) Date of publication and mention of the grant of the patent: **14.08.2013**
(21) Application number: 10306172.7
(22) Date of filing: 26.10.2010
(51) Int. Cl.: H04J 14/02

(54) **Multidirectional add and drop devices for an optical network element**
Multidirektionale Add-and-Drop-Vorrichtungen für ein optisches Netzwerkelement
Dispositifs d'extraction/insertion multidirectionnels pour élément de réseau optique

(43) Date of publication of application: 02.05.2012
(73) Proprietor: Alcatel Lucent, 75007 Paris (FR)
(72) Inventor: Lavigne, Bruno, 91620 Nozay (FR); Rouvillain, Delphine, 91620 Nozay (FR); Zami, Thierry, 91620 Nozay (FR)
(74) Representative: Therias, Philippe

(56) References cited:
- US-A1- 2004 151 499
- US-A1- 2009 232 497
- PAOLO GHELFI ET AL: "Optical Cross Connects Architecture with per-Node Add&Drop Functionality", OPTICAL FIBER COMMUNICATION CONFERENCE AND EXPOSITION NATIONAL FIBER OPTIC ENGINEERS CONFERENCE. OFCNFOEC 2007, 25-29 MARCH 2007, ANAHEIM, CA, USA, IEEE, PISCATAWAY, NJ, USA, 1 March 2007 (2007-03-01), pages 1-6, XP031146478, ISBN: 978-1-55752-831-5
- WOODWARD S L ET AL: "Massively-scaleable highly-dynamic optical node design", OPTICAL FIBER COMMUNICATION (OFC), COLLOCATED NATIONAL FIBER OPTIC ENGINEERS CONFERENCE, 2010 CONFERENCE ON (OFC/NFOEC), IEEE, PISCATAWAY, NJ, USA, 21 March 2010 (2010-03-21), pages 1-3, XP031677259,
- STEVEN GRINGERI ET AL: "Flexible architectures for optical transport nodes and networks", IEEE COMMUNICATIONS MAGAZINE, IEEE SERVICE CENTER, PISCATAWAY, US, vol. 48, no. 7, 1 July 2010 (2010-07-01), pages 40-50, XP011312222, ISSN: 0163-6804
- BRANDON COLLINGS: "Physical layer components, architectures and trends for agile photonic layer mesh networking", 35TH EUROPEAN CONFERENCE ON OPTICAL COMMUNICATION, 2009. ECOC '09, VIENNA, AUSTRIA, IEEE, PISCATAWAY, NJ, USA, 20 September 2009 (2009-09-20), pages 1-3, XP031546399, ISBN: 978-1-4244-5096-1

## Description

### Field of the invention

The invention relates to the technical field of optical add devices and drop devices for optical communication systems, in particular for transparent wavelength switching nodes.

### Background

Mastery of optical fiber wavelength division multiplexing (WDM) transmission technology is a major factor in meeting the increasing needs of data transfer rates in the transmission of information. The term "transparent" is applied to a transmission system in which the signal remains optical without being converted into an electronic signal when passing through a network routing node. Transparency in optical communication networks is a characteristic that makes it possible to reduce the cost of network equipment by eliminating optical-electrical-optical conversions, and therefore the corresponding transducers. Wavelength switching nodes used in transparent WDM networks include devices known as reconfigurable optical add-drop multiplexers (ROADM) or optical crossconnects (OXC). In order to construct such devices, subsystems known as Wavelength Selective Switches (WSS) are particularly attractive. WSSs make it possible to create switching nodes having a very flexible configuration with a much simpler structure than when using discrete components, as well as a reduced size and high reliability.

Add and drop devices in WDM network elements refer to subsystems providing add and drop functions, i.e. a capability to make write-accesses and read-accesses to the WDM transport layer.

In "Optical Cross Connects Architecture with per-Node Add&Drop Functionality" by Paolo Ghelfi et Al, a cross connect node (OXC) has a number of ports connected to the neighboring OXCs. Each optical port is able to demultiplex the WDM traffic coming from an adjacent node, and to switch it to other ports in the optical OXC. Each bidirectional port of the node exploit a splitter as a demultiplexer and are connected to one of the Add&Drop interfaces. Those Add&Drop interfaces include a wavelength selective switch (WSS).

"Massively scalable highly-Dynamic optical node design" by Woodards S L et Al describes a node architecture capable of supporting a highly-dynamic, multi-terabit core network. Wavelengths are sent to transponders via mux/demux structures to a minimum of two transponder banks.

In "Flexible architectures for optical transport nodes and networks" by Steven Gringeri et Al, an optical splitter distributes incoming channels from one degree to the add/drop portion of this degree and to the WSS of all other degrees. The add/drop portion is equipped with a MxN WSS which can switch any wavelength from any input port to any output port as long as that wavelength is not already in use on the output port.

US2004/151499 relates to a node connection structure and a node structure appropriate for redundancy, and more specifically to an optical node system and its switched connection method. A protection switch is configured for an input optical signal using an nxn optical switch. Furthermore, a signal to be added and dropped is also configured using an nxn optical switch.

### Summary

In an embodiment, the invention provides a multidirectional optical drop device for an optical network element, comprising:
a first WDM drop link connected to a first WDM input line of the network element,
a first wavelength demultiplexer comprising a WDM input connected to the first WDM drop link for inputting optical signals on a plurality of wavelength channels and a plurality of outputs, the first wavelength demultiplexer being adapted to selectively pass respective optical signals to respective outputs as a function of wavelength,
a first group of optical receivers respectively connected to a first subset of the outputs of the first wavelength demultiplexer,
a second WDM drop link connected to a second WDM input line of the network element,
a first wavelength demultiplexer comprising a WDM input connected to the first WDM drop link for inputting optical signals on a plurality of wavelength channels and a plurality of outputs, the first wavelength demultiplexer being adapted to selectively pass respective optical signals to respective outputs as a function of wavelength,
a first group of optical receivers respectively connected to a first subset of the outputs of the first wavelength demultiplexer,
a second WDM drop link connected to a second WDM input line of the network element,
a second wavelength demultiplexer comprising a WDM input connected to the second WDM drop link for inputting optical signals on the plurality of wavelength channels and a plurality of outputs, the second wavelength demultiplexer being adapted to selectively pass respective optical signals to respective outputs as a function of wavelength,
a second group of optical receivers respectively connected to a first subset of the outputs of the second wavelength demultiplexer,
and recirculation means adapted to pass optical signals between a second subset of the outputs of the first wavelength demultiplexer and the optical receivers of the second group and adapted to pass optical signals between a second subset of the outputs of the second wavelength demultiplexer and the optical receivers of the first group.

Such arrangement makes it possible to use a same receiver for receiving optical signals from several input lines or input directions of the network element, a property also known as multidirectional drop functionality. At the same time, such arrangement of plural group of receivers makes it possible to avoid contention among plural client signals for a given receiver or optical path, property also known as contentionless drop functionality.

According to embodiments, such drop devices can comprise one or more of the features below.

In embodiments of the optical drop device, the combining component may take different forms, e.g. a power coupler or a switch.

In embodiments of the optical drop device, the first and second wavelength demultiplexers are programmable. Such a programmable wavelength demultiplexers may take different forms, e.g. a wavelength selective switch or other. Preferably, at least one of the first and second programmable wavelength demultiplexers comprises a fixed wavelength demultiplexer connected to an optical spatial switching matrix adapted to produce a plurality of optical paths as a function of a configuration state.

In embodiments of the optical drop device, the first programmable wavelength demultiplexer comprises a first fixed wavelength demultiplexer having the WDM input and a first optical spatial switching matrix having the plurality of outputs, wherein outputs of the first fixed wavelength demultiplexer are connected to inputs of the first optical spatial switching matrix, and the second programmable wavelength demultiplexer comprises a second fixed wavelength demultiplexer having the WDM input and a second optical spatial switching matrix having the plurality of outputs, wherein outputs of the second fixed wavelength demultiplexer are connected to inputs of the second optical spatial switching matrix, each of the first and second optical spatial switching matrices being adapted to produce a plurality of optical paths as a function of a configuration state.

In embodiments, the inputs of the first optical spatial switching matrix comprise a first subset connected to the outputs of the first fixed wavelength demultiplexer and a second subset, the inputs of the second optical spatial switching matrix comprise a first subset connected to the outputs of the second fixed wavelength demultiplexer and a second subset, and the recirculation means comprise first recirculation lines connecting the second subset of the outputs of the first optical spatial switching matrix to the second subset of the inputs of the second optical spatial switching matrix and second recirculation lines connecting the second subset of the outputs of the second optical spatial switching matrix to the second subset of the inputs of the first optical spatial switching matrix.

In embodiments of the optical drop device, the recirculation means comprise an optical spatial switching matrix comprising a plurality of demultiplexer-side ports and a plurality of receiver-side ports, wherein the optical spatial switching matrix is adapted to produce a plurality of optical paths as a function of a configuration state, each optical path adapted to carry optical signals on the plurality of wavelength channels between a selected one of the demultiplexer-side ports and a selected one of the receiver-side ports,
a first subset of the demultiplexer-side ports being respectively connected to the second subset of the outputs of the first wavelength demultiplexer,
a second subset of the demultiplexer-side ports being respectively connected to the second subset of the outputs of the second wavelength demultiplexer,
a first subset of the receiver-side ports being respectively connected to the optical receivers of the first group,
a second subset of the receiver-side ports being respectively connected to the optical receivers of the second group,
wherein each optical receiver of the first and second groups is connected to a combining component for combining an optical signal from the corresponding receiver-side port of the optical spatial switching matrix and an optical signal from the corresponding output of the first or second wavelength demultiplexer.

In embodiments of the optical drop device, a third group of optical receivers are respectively connected to a third subset of the receiver-side ports of the optical spatial switching matrix.

In embodiments, the multidirectional optical drop device further comprises a second optical spatial switching matrix comprising a plurality of demultiplexer-side ports and a plurality of receiver-side ports respectively connected in the same manner as those of the first optical spatial switching matrix. A plurality of optical spatial switching matrices may be provided in the same manner for the purpose of redundancy, protection against faults and/or increasing the capacity of the drop device.

In embodiments, the multidirectional optical drop device further comprises a first programmable multiplexer arranged between the first WDM drop link and a plurality of WDM input lines of the network element and a second programmable multiplexer arranged between the second WDM drop link and the plurality of WDM input lines of the network element, each programmable multiplexer being adapted to pass to the associated WDM drop link a plurality of optical signals from the plurality of WDM input lines on a selected plurality of wavelength channels. Such arrangement makes it possible to receive optical signals originating from several input lines or input directions of the network element at the first or second demultiplexer, i.e. a so-called property of front-side multi-directionality, as opposed to the back-side multidirectionality provided by the optical spatial switching matrix.

In embodiments, the first WDM drop link is arranged to receive the whole incoming traffic of the first WDM input line of the network element through a first power splitter and the second WDM drop link is arranged to receive the whole incoming traffic of the second WDM input line of the network element through a second power splitter.

In embodiments, a WDM drop link comprises a wideband optical amplifier. Preferably, a wavelength blocker module may be arranged to equalize a power spectrum of the optical signals upstream of the optical amplifier.

In embodiments, the optical receivers may include quadratic receivers with a tunable reception wavelength. Alternatively, the optical receivers may comprise tunable coherent receivers which can be tuned to any wavelength channel by adapting the frequency of a local oscillator. Coherent receivers may be preferred for transmissions employing very high efficiency modulation schemes such as quadratic phase shift keying with polarization division multiplexing (PDM-QPSK) or others.

In an embodiment, the invention provides a multidirectional optical add device for an optical network element, comprising:
a first WDM add link connected to a first WDM output line of the network element,
a first wavelength multiplexer comprising a WDM output connected to the first WDM add link for outputting optical signals on a plurality of wavelength channels and a plurality of inputs, the first wavelength multiplexer being adapted to selectively pass respective optical signals from respective inputs as a function of wavelength,
a first group of optical transmitters respectively connected to a first subset of the inputs of the first wavelength multiplexer,
a second WDM add link connected to a second WDM output line of the network element,
a second wavelength multiplexer comprising a WDM output connected to the second WDM add link for outputting optical signals on the plurality of wavelength channels and a plurality of inputs, the second wavelength multiplexer being adapted to selectively pass respective optical signals to respective inputs as a function of wavelength,
a second group of optical transmitters respectively connected to a first subset of the inputs of the second wavelength multiplexer,
and recirculation means adapted to pass optical signals between the optical transmitters of the second group and a second subset of the inputs of the first wavelength multiplexer and adapted to pass optical signals between the optical transmitters of the first group a second subset of the inputs of the second wavelength multiplexer.

Such arrangement makes it possible to transmit optical signals to several output lines or output directions of the network element from a same optical transmitter, a property also known as multidirectional add functionality. At the same time, such arrangement of plural groups of optical transmitters makes it possible to avoid contention among plural client signals for a given transmitter or optical path, a property also known as contentionless add functionality.

In embodiments, the distributing component may take different forms, e.g. a power splitter or a switch.

In embodiments, the first and second wavelength multiplexers are programmable. Such a programmable wavelength multiplexers may take different forms, e.g. a wavelength selective switch or other. Preferably, at least one of the first and second programmable wavelength multiplexers comprises a fixed wavelength multiplexer connected to an optical spatial switching matrix adapted to produce a plurality of optical paths as a function of a configuration state.

In embodiments, the first programmable wavelength multiplexer comprises a first fixed wavelength multiplexer having the WDM output and a first optical spatial switching matrix having the plurality of inputs, wherein inputs of the first fixed wavelength multiplexer are connected to outputs of the first optical spatial switching matrix, and the second programmable wavelength multiplexer comprises a second fixed wavelength multiplexer having the WDM output and a second optical spatial switching matrix having the plurality of inputs, wherein inputs of the second fixed wavelength multiplexer are connected to outputs of the second optical spatial switching matrix, each of the first and second optical spatial switching matrices being adapted to produce a plurality of optical paths as a function of a configuration state.

In embodiments, the outputs of the first optical spatial switching matrix comprise a first subset connected to the inputs of the first fixed wavelength multiplexer and a second subset, the outputs of the second optical spatial switching matrix comprise a first subset connected to the inputs of the second fixed wavelength multiplexer and a second subset,and the recirculation means comprise first recirculation lines connecting the second subset of the outputs of the first optical spatial switching matrix to the second subset of the inputs of the second optical spatial switching matrix and second recirculation lines connecting the second subset of the outputs of the second optical spatial switching matrix to the second subset of the inputs of the first optical spatial switching matrix.

In embodiments, the recirculation means comprise an optical spatial switching matrix comprising a plurality of multiplexer-side ports and a plurality of transmitter-side ports, wherein the optical spatial switching matrix is adapted to produce a plurality of optical paths as a function of a configuration state, each optical path adapted to carry optical signals on the plurality of wavelength channels between a selected one of the transmitter-side ports and a selected one of the multiplexer-side ports,
a first subset of the multiplexer-side ports being respectively connected to the second subset of the inputs of the first wavelength multiplexer,
a second subset of the multiplexer-side ports being respectively connected to the second subset of the inputs of the second wavelength multiplexer,
a first subset of the transmitter-side ports being respectively connected to the optical transmitters of the first group,
a second subset of the transmitter-side ports being respectively connected to the optical transmitters of the second group,
wherein each optical transmitter of the first and second groups is connected to a distributing component for distributing an optical signal from the optical transmitter to the corresponding transmitter-side port of the optical spatial switching matrix and the corresponding input of the first or second wavelength multiplexer.

In embodiments, the multidirectional optical add device further comprises a third group of optical transmitters respectively connected to a third subset of the transmitter-side ports of the optical spatial switching matrix.

In embodiments, the multidirectional optical add device further comprises a second optical spatial switching matrix comprising a plurality of multiplexer-side ports and a plurality of transmitter-side ports respectively connected in the same manner as those of the first optical spatial switching matrix. A plurality of optical spatial switching matrices may be provided for the purpose of redundancy, protection against faults and/or increasing the capacity of the add device.

In embodiments, the multidirectional optical add device further comprises a first power splitter arranged between the first WDM add link and the plurality of WDM output lines of the network element and a second power splitter arranged between the second WDM add link and the plurality of WDM output lines of the network element. Such arrangement makes it possible to pass optical signals originating from the first or second multiplexer to several output lines or output directions of the network element, i.e. a so-called property of front-side multidirectionality, as opposed to the back-side multidirectionality provided by the optical spatial switching matrix.

In embodiments, the optical transmitters may operate with a fixed or tunable wavelength.

Aspects of the invention are based on the idea of equipping optical network elements with add and drop functions that fulfill multiple requirements such as:
- Flexible operations, e.g. multidirectional, contentionless and/or colorless operations,
- Suitability for high datarate signals, especially low impact on physical quality of signals,
- Progressive scalability or suitability for pay-as-you-grow deployment,
- High capacity,
- Protection against components faults
- Cost-efficiency.

Aspects of the invention are based on the idea of creating a drop device by providing several receiver blocks, each comprising a group of receivers and an associated wavelength demultiplexer, and additional reconfigurable redirection optical paths to pass the signals to be dropped from the demultiplexer of one receiver block to a receiver belonging to another receiver block.

Aspects of the invention are based on the idea of creating an add device by providing several transmitter blocks, each comprising a group of transmitters and an associated wavelength multiplexer, and additional reconfigurable redirection optical paths to pass the signals to be added from a transmitter of one transmitter block to the multiplexer belonging to another transmitter block.

Aspects of the invention stem for the observation that modern optical spatial switching matrices can provide a large number of ports with a small cost per port and low losses.

### Brief description of the drawings

These and other aspects of the invention will be apparent from and elucidated with reference to the embodiments described hereinafter, by way of example, with reference to the drawings.
Figure 1 is a functional representation of a receiver block which may be used in embodiments of the invention.
Figure 2 is a functional representation of a degree-3 optical switching node in which embodiments of an add device and a drop device are implemented.
Figure 3 is a functional representation of a degree-3 optical switching node in which further embodiments of an add device and a drop device are implemented.
Figure 4 is a functional representation of a further embodiment of a drop device that can be used in the optical switching node of Fig. 2 or 3.
Figure 5 is a functional representation of a further embodiment of an add device that can be used in the optical switching node of Fig. 2 or 3.

### Detailed description of the embodiments

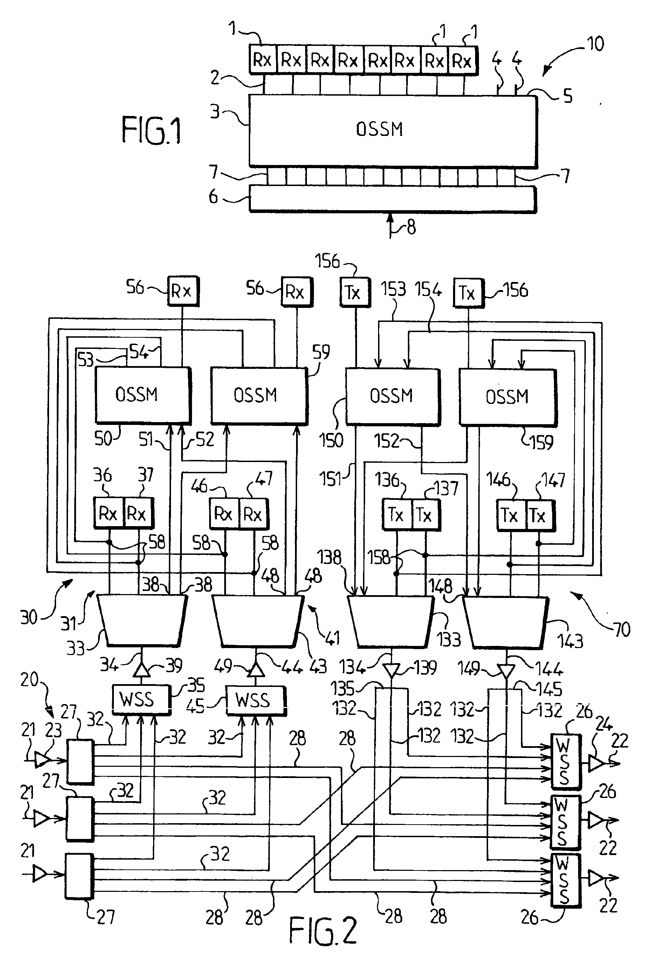

With reference to Figure 1, an embodiment of receiver block 10 for an optical drop device is shown. The receiver block 10 comprises optical receivers 1, for example coherent receivers, intended to demodulate optical signals modulated with data to provide the data to client devices, not shown. The client devices refer to any system that interfaces with the WDM network to receive information signals transported by the WDM network, i.e. to make a read access to the WDM layer, including for example an electronic switch intended to transfer the information signals to a further network.

With a coherent receiver, it is possible to select a wavelength channel to be demodulated among a plurality of superimposed wavelength channels by finely tuning a monochromatic local oscillator. Therefore, at least in the case where coherent receivers are used, the corresponding optical input line 2 connected to the coherent receiver 1 may carry a single wavelength channel, i.e. a colored optical signal, or a plurality of superimposed wavelength channels, i.e. a WDM optical signal.

To route the optical signals to the receivers 1, an optical spatial switching matrix 3 (OSSM) is provided. The OSSM 3 comprises output ports on the receiver-side 5 and input ports on the opposite side. The OSSM 3 is a configurable non-blocking space switch that can be configured to generate transparent optical paths between any of its input ports and any of its output ports to pass colored or WDM optical signals independently of the wavelength thereof, within a given spectral window of course. Each input line 2 is connected to a respective output port of the OSSM 3. The OSSM 3 may be implemented with diverse technologies, e.g. MEMS-operated reflectors or piezoelectric optical beam steering. Suitable MEMS-based OSSMs are available from manufacturers such as Calient Technologies or CrossFiber Inc.

The input ports of the OSSM 3 are connected by optical lines 7 to a wavelength demultiplexer 6, e.g. an arrayed waveguide grating (AWG) or other. The wavelength demultiplexer 6 should obviously be adapted to the frequency grid in use in the optical network, e.g. a standard ITU grid. Upon receiving a WDM single at the input 8, the wavelength demultiplexer 6 passes optical signals on different wavelength channels to different optical lines 7 and the OSSM 3 passes them to respective receivers. The OSSM 3 may have some remaining ports 4 on the receiver side 5 that are not directly connected to the receivers 1. Such remaining ports 4 may serve several purposes, such as scaling the receiver block 10 capacity by connecting additional receivers or passing some of the optical signals to further components, e.g. forwarding optical signals to another receiver block as will be explained below.

The port count of the OSSM 3 can be high enough, possibly higher than the number of wavelength channels on the grid, e.g. up to 128 ports on each side for a typical 80 channels grid. Therefore it is possible to provide enough receivers 1, e.g. about 80, to demodulate a single on each channel simultaneously while reserving remaining ports 4 for other purposes. Besides, it is sometimes sufficient to equip a receiver block 10 with a lower number of optical receivers 1 since there usually exists a fraction of the incoming traffic in an optical element that is intended to traverse the node transparently (through-traffic).

The combined reconfigurability of the OSSM 3 and wavelength tunability of the optical receivers 1 make it possible to receive any of the wavelength channels on any of the receivers 1. This feature of the receiver block 10 provides some protection against receiver failures.

The receiver block 10 of Figure 1 can be designed with relatively low power losses between the WDM input 8 and a receiver 1, namely for example about -4dB in the OSSM 3 and -10 to -13 dB in the wavelength demultiplexer 6. As the wavelength demultiplexer 6, noncyclic AWGs can be preferred due to lower losses.

A similar transmitter block can be designed by substituting the receivers 1 with transmitters in the receiver block 10 and using the OSSM 3 and wavelength demultiplexer 6 in the opposite direction. As both the optical properties of OSSM 3 and wavelength demultiplexer 6 are the same in both directions, the operation of such add device can be directly deduced from the above description of drop device 10. The low losses are also beneficial in such a transmitter block.

With reference to Figure 2, an optical transparent switching node 20 equipped with a multidirectional drop device and a multidirectional add device will now be described.

The optical node 20 as shown has a degree-3 connectivity, namely it has three WDM input lines 21 and three WDM output lines 22 and can be connected bidirectionally with three respective neighboring nodes in a transparent network. The optical node 20 can be used in a transparent network or transparent network island with any topology, e.g. mesh, ring, star, tree and others. The same type of architecture could be used for making an optical node with a different, higher or lower degree of connectivity.

As shown, each WDM input line 21 may comprise an optical amplifier 23 and each WDM output line 22 may comprise an optical amplifier 24 to compensate for the losses of the node components.

Each input line 21 is connected to send the WDM traffic to a respective distributing component 27 that may be a power splitter or a Wavelength Selective Switch (WSS). Each output line 22 is connected to receive WDM traffic from a WSS 26. If the components 27 are WSSs, the components 26 can consist of optical couplers. Between the components 27 and 26, a plurality of transit lines 28 are connected to pass transit traffic from any of the input lines 21 to any of the output lines 22, although it is ordinarily not necessary to provide a transit line between a pair of input and output lines that connect to a same neighboring node.

In a preferred embodiment, the components 27 are power splitters and the components 26 are WSSs, an architecture known as broadcast-and-select.

The multidirectional drop device 30 of the node will now be described. The multidirectional drop device 30 comprises two receiver blocks 31 and 41 that may be designed as the receiver block 10 of Fig. 1. More precisely, receiver block 31, resp. 41 comprises a programmable demultiplexer 33, resp. 43 with a WDM input connected to a WDM drop line 34, resp. 44 to receive optical signals to be dropped and a plurality of outputs, some of which are connected to optical receivers 36 and 37, resp. 46 and 47. The programmable demultiplexer 33 or 43 can be made of the combination of a fixed wavelength demultiplexer with an OSSM, as in the receiver block 10 of Fig. 1. Alternatively, the programmable demultiplexer 33 or 43 may be a WSS or an optical splitter having a wavelength-tunable optical filter on each of its output ports.

For each receiver block 31 and 41, a merging component 35, resp. 45 e.g. a WSS or power coupler, is connected to a plurality of drop lines 32 from each of the components 27 corresponding to the respective input lines 21, to receive signals to be dropped from all input lines 21. The merging component 55 passes some or all of those signals to the drop line 34, resp. 44. Hence, each receiver block 31, resp. 41 can receive optical signals to be dropped from each input line 21 to provide multidirectional operations.

In an embodiment, the components 27 are power splitters and the merging components 35 and 45 are WSSs programmed to avoid spectral collisions among signals. The drop device 30 receives signals to be dropped from each of the components 27 by two respective WDM drop lines 32. The WDM lines 32 pass actually all the incoming traffic to the drop device. Each drop line 32 is connected to a port of the respective WSS 35 or 45 used as a programmable multiplexer. The WSSs 35 and 45 are configured to block signals that are not to be dropped, as a function of their wavelengths, and to pass signals to be dropped to at least one of the two receiver blocks 31 and 41, as a function of their wavelengths.

A wavelength selective switch (WSS) refers to a piece of equipment that may be used as a reconfigurable multiplexer or a reconfigurable demultiplexer. When it is acting as a demultiplexer, a plurality of selectable ports serve as outputs, and a shared port serves as a common input. The wavelength selective switch is capable of switching each wavelength channel received at the input to a selected output of that piece of equipment, based on a control signal sent by a control unit not shown. This piece of equipment thereby carries out a reconfigurable demultiplexing function on wavelength channels whose optical frequencies are aligned with one or more predetermined frequency grids. It makes it possible to pass, to each output, one channel, multiple channels, or no channel, selected from among the channels received at the shared input.

The switching of channels within the WSS is produced by spatial light manipulation organs, such as micromirrors activated by MEMS micro-actuators or liquid crystal cells. In addition to selecting the channels, these organs may be capable of adjusting the signal attenuation for each wavelength channel. In this manner, each WSS 35 and 45 serves to both select the wavelength channels that must be dropped from a given input line 21 and to adjust their output power channel-by-channel towards the receiver blocks 31 and 41.

In an alternative embodiment, the components 27 are WSSs and the merging components 35 and 45 are power couplers. Therefore, the functions described above in respect of the WSSs 35 and 45 can be fulfilled by the WSSs 27 instead.

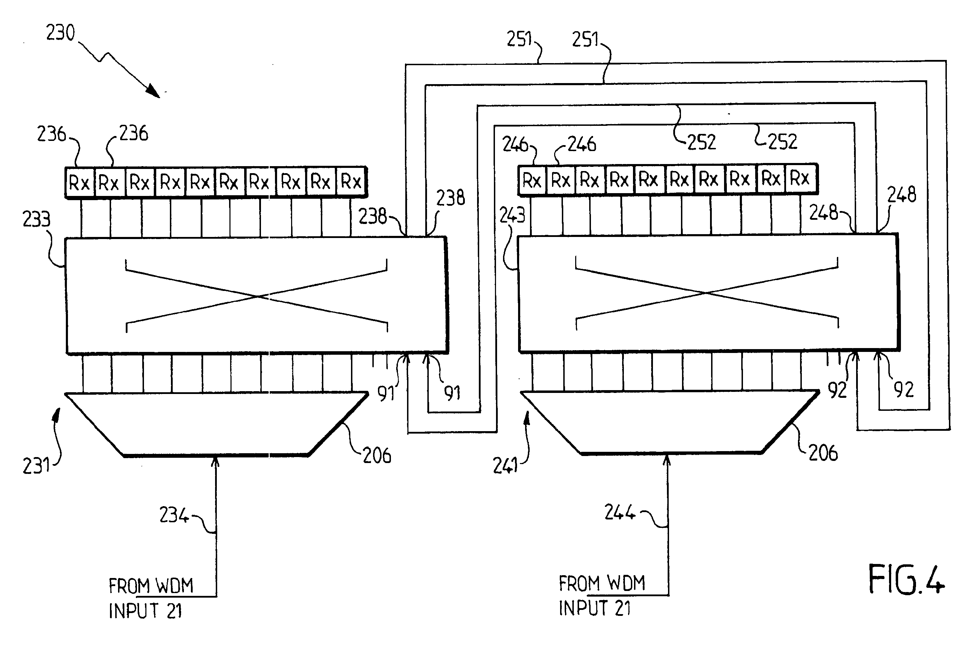

The dimensioning of the drop device 30 is preferably made as follows: for the sake of functionality, especially mitigation of wavelength contention, the receiver blocks may be provided in as high a number as possible. However, for cost constraints, a number of the receiver blocks may be lower or preferably equal to the number of the input lines 21 from which traffic to be dropped must be received, i.e. 3 in figure 4. A number of receivers per receiver block may be lower or equal to the number of wavelength channels used in the network, e.g. 80. It is assumed that the same frequency grid is used on all input and output lines 21 and 22. The number of wavelength channels used in the network refers to the number of carrier frequencies in such frequency grid.

Alternatively, a number of receivers per block can be lower depending on the actual drop capacity needed, i.e. number of channels to be dropped simultaneously at any point in time. Moreover, a drop capacity can be scaled progressively by connecting additional receivers to previously unused OSSM ports of a receiver block and/or by connecting additional receiver blocks to previously unused ports of the components 27.

In the drop device 30 of Figure 2, the merging components 35 and 45 add power losses in the drop path, e.g. in the amount of about -8 dB for WSSs. To compensate for the losses, optical amplifiers such as EDFAs can be provided in the drop path, e.g. on each drop line as shown at numerals 39 and 49.

In the drop device 30, additional output ports 38, resp. 48 of the programmable demultiplexer 33, resp. 43 serve to interconnect the respective receiver blocks 31 and 41. Namely, an additional OSSM 50 has first demultiplexer-side ports connected to output ports 38 of programmable demultiplexer 33 by optical lines 51 and second demultiplexer-side ports connected to output ports 48 of programmable demultiplexer 43 by optical lines 52. The OSSM 50 has first receiver-side ports connected to receivers 36 of receiver block 31 by optical lines 53 and second receiver-side ports connected to receivers 46 of receiver block 41 by optical lines 54. For the sake of simplicity, only one optical line 51, one optical line 52, one optical line 53, one optical line 54, one receiver 36 and one receiver 46 are shown.

At receivers 36 and 46, a 2x1 power coupler or 2x1 optical switch 58 is arranged to make it possible for the optical receiver to receive an optical signal either from the associated demultiplexer 33, resp. 43 or from the OSSM 50. In case a power coupler is used, the configuration of the OSSM 50 and demultiplexers 33 and 43 should be coordinated to avoid sending two optical signals at the same time to a same receiver.

The OSSM 50 makes it possible to preserve the multidirectional operations and the drop capacity of the drop device 30 despite potential failure events:
- For example, if demultiplexer 33 of receiver block 31 fails, an optical signal to drop can be routed through receiver block 41, optical line 52, OSSM 50 and optical line 53 to optical receiver 36. Therefore the drop capacity of the receivers in the impacted block can still be used even though the demultiplexer 33 is out of service.
- In another case, if the receiver 36 of receiver block 31 fails and no back-up receiver is available in receiver block 31, an optical signal that was being received by receiver 36 can be rerouted through optical line 51, OSSM 50 and optical line 54 to receiver 46.

The OSSM 50 also makes it possible to scale the drop capacity of the drop device 30 by plugging additional optical receivers 56. Due to the connection of the OSSM 50 to both demultiplexers 33 and 43, the additional optical receivers 56 offer multidirectional operations as well.

In order to scale the drop device capacity and/or provide protection against faults of the OSSM 50, a plurality of parallel OSSMs can be arranged in the same manner. Fig. 2 shows a second OSSM 59 arranged in the same manner as OSSM 50. Therefore the operations of OSSM 59 need not be further described.

In drop device 30 of Fig. 2, multidirectional operations are provided at two levels:
- Front-side multidirectionality results from the capability of each programmable demultiplexer 33 and 43 to receive optical signals from several or all WDM input lines 21 of the node through merging components 35 and 45.
- Back-side multidirectionality is provided by the OSSM 50 (and 59 as the case may be) which can redirect optical signals from the programmable demultiplexer of one receiver block to an optical receiver of another receiver block.

Figure 2 shows a very limited number of optical receivers 36, 37, 46, 47 for the sake of clarity. However, it should be understood that each receiver shown illustrates a specific type of connection to the other components of the drop device. Each of those optical receivers with corresponding connection lines should be provided in a high number to obtain a drop device with a practical capacity. That number depends on the capacity requirement of the drop device, which is a function of the number of channels in the grid, the number of input lines 21 and statistical considerations relating to the traffic. It should be noted that the optical lines 51 and 52 also illustrate connection types that should be implemented in a high number in practice. Namely the OSSM 50 should have about the same number of optical lines on the demultiplexer-side than on the receiver-side. Besides, preferably all the optical receivers of a receiver block should be equipped with a 2x1 coupler or switch 58 connected to the OSSM 50 or 59, as shown on Fig. 2.

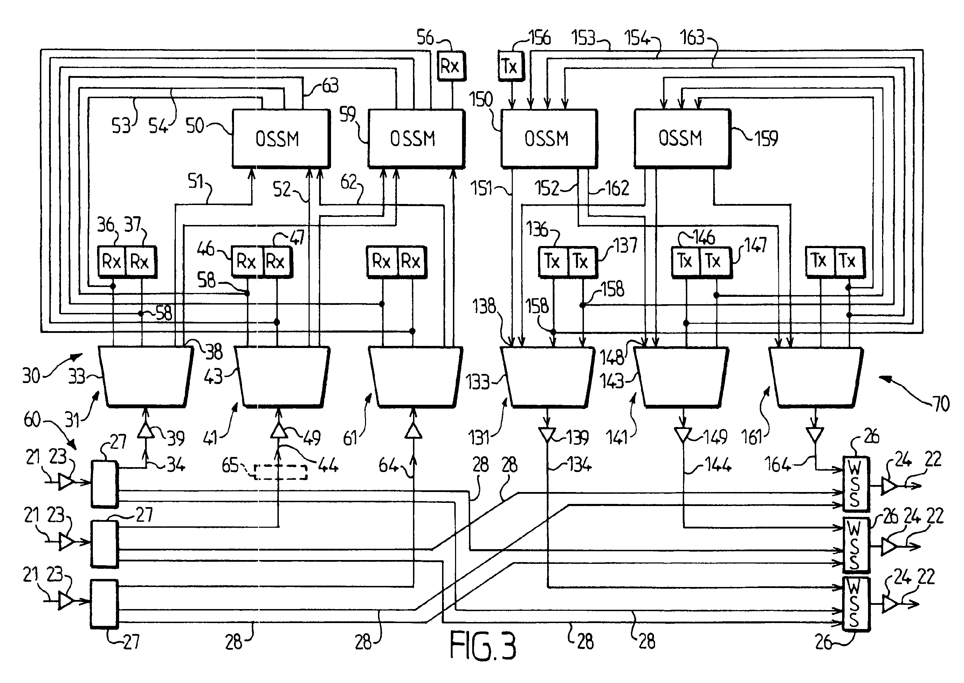

Turning now to Fig. 3, an optical transparent switching node 60 equipped with another embodiment of a drop device will now be described. Elements similar to those of Figure 2 are designated by the same numeral.

In the embodiment of Figure 3, a respective receiver block 31, 41 and 61 is connected to each of each of three transmission directions 21 of the optical node. Namely, the WDM drop line 34, resp. 44, 64 is connected to a port of a single distributing component 27 to receive optical signals to be dropped from a single input line 21. Therefore, compared to Fig. 2, the merging components 35, 45 are suppressed and front-side multidirectionality is no more present. However, a drop device 30 offering multidirectional operations is still obtained through the above-mentioned back-side multidirectionality.

The OSSMs 50 and 59 are connected to the third receiver block 61 in the same manner as the first two receiver blocks. Corresponding optical lines 62 and 63 are shown on Fig. 3 to illustrate the type of connections involved with OSSM 50.

In an alternative embodiment shown on Figure 3, a wavelength blocker (WB) may be mounted on each drop line 34, 44, ... in front of the optical amplifiers 39, 49 ...as shown in dotted line at numeral 65. The wavelength blockers 65 are configured to flatten the power spectrum of the optical signals before they enter the amplifiers 39, 49 i.e. so as to compensate for the power imbalance of the channels. Suitable wavelength blockers are available e.g. from manufacturer Nistica Inc, Oclaro or Neophotonics.

On the one hand, a consequence of the WB 65 is a reduction of the input channel power in the EDFA 39, 49 e.g. in the amount of -6 dB. Thus, the optical signal-to-noise ratio (OSNR) at the output of EDFA 39, 49 will be degraded by -6 dB. However, as long as the channels to be dropped do not suffer too much insertion losses between the optical amplifiers 23 located just at the WDM input of the node and the EDFA 39, 49, e.g. no more than -18 dB in total, the corresponding OSNR will remain high enough, e.g. higher than 33 dB/0.1 nm assuming that the amplifier 23 has an output optical power greater or equal to 23 dBm. On the other hand, an advantage of the WB 65 is the capability to obtain a perfectly flat WDM comb at the input of EDFA 39, 49. Hence, provided that EDFA 39, 49 has a flat spectral gain, the channel power spread at the output of EDFA 39, 49 may be narrow, e.g. within a 1 dB range. This limited spread makes it possible to improve the smallest channel power on the receiver by several dB compared to a situation where unbalanced channels are directly fed into the amplifiers 39, 49.

The optical switching nodes of Figures 2 and 3 are also equipped with multidirectional add devices 70 that will now be described. The structure and operations of the add devices 70 are entirely symmetrical to those of the drop devices 30. Therefore corresponding elements will be designated by the same reference numeral increased by 100. A transmitter block 131, 141 is constructed as a receiver block 31, 41 in which receivers 36, 37, 46, 47 are replaced by optical transmitters 136, 137, 146, 147. All components like optical lines, amplifiers, OSSMs, and wavelength demultiplexers operate to pass optical signals in the reverse direction compared to the drop device 30.

In the embodiment of Fig.3, each add line 134, 144, 164 connects a respective programmable multiplexer to a respective WSS 26so as to add traffic on the corresponding output line 22.

In the embodiment of Fig.2, a distributing component 135, 145, e.g. a power splitter, is connected to a plurality of add lines 132 towards each of the WSSs 26 corresponding to the respective output lines 22, to pass signals to be added to all output lines 22. The distributing component 135, 145 receives all those signals from the multiplexer 133, 143. The WSSs 26 operate both to merge signals to be added from the plural multidirectional transmitter blocks 131, 141 and to merge signals to be added with transit signals. If the components 26 are optical couplers instead of WSSs, the distributing components 135, 145 consist preferably of WSSs acting as wavelength demultiplexers.

The add device 70 is adapted to provide multidirectional operations in the same way as the corresponding drop device 30.

With reference to figure 4, another embodiment of a multidirectional optical drop device 230 will now be described. Elements similar to those of figure 2 and 3 are designated by the same numeral increased by 200. The drop lines 234 and 244 can be connected to the node inputs in a directional manner as in Fig. 3 or in a multidirectional manner as in Fig. 2. Besides, this embodiment also provides a back-side multidirectional functionality as will be explained below.

In this embodiment, a receiver block 231 comprises a fixed wavelength demultiplexer having an input connected to the drop line 234 and a plurality of outputs connected to an OSSM 233. The port count of the OSSM 233 is higher than that of the demultiplexer 206 so that ports 91 in excess remain available on the input side of OSSM 233 for recirculation of signals between the receiver blocks. On the output side of OSSM 233, a plurality of ports is connected to optical receivers 236 whereas ports 238 in excess remain available for recirculation of signals between the receiver blocks. A second receiver block 241 is made in the same way with a demultiplexer 206, an OSSM 243 and optical receivers 246. The OSSM 243 has a plurality of ports 92 in excess on the input side and a plurality of ports 248 in excess on the output side.

A first plurality of optical lines 251 serves to connect the outputs 238 of OSSM 233 to the inputs 92 of OSSM 243 and a second plurality of optical lines 252 serves to connect the outputs 248 of the OSSM 243 to the inputs 91 of OSSM 233. The optical lines 251 and 252 make it possible to redirect optical signals from the OSSM of one of the receiver blocks 231 or 241 to the receivers of the other receiver block, so that each optical receiver can operate in a multidirectional manner.

The optical lines 251 and 252 make it possible to obtain multidirectional operations of the receivers even though the drop lines 234 and 244 are connected to a single WDM input each. For example, if all receivers 236 of receiver block 231 are busy or failed, an additional optical signal to be dropped that was received through drop line 234 can be rerouted through optical line 251 and OSSM 243 to a receiver 246.

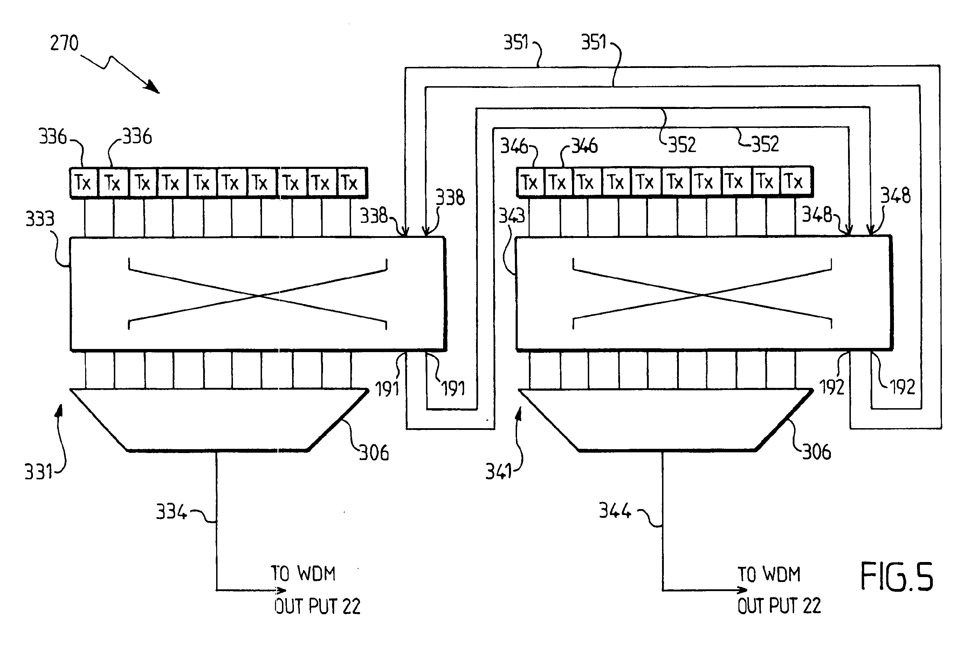

With reference to figure 5, another embodiment of a multidirectional optical add device 270 will now be described. The structure and operations of the add device 270 are entirely symmetrical to those of the drop devices 230. Therefore corresponding elements will be designated by the same reference numeral increased by 100. A transmitter block 331, 341 is constructed as a receiver block 231, 241, in which receivers 236, 246 are replaced by optical transmitters 336, 346. All components like optical lines, amplifiers, OSSMs, and wavelength demultiplexers operate to pass optical signals in the reverse direction compared to the drop device 230.

Simulations have shown that increasing the number of receiver blocks (resp. transmitter blocks) improves mitigation of wavelength contention. For example, with a degree-4 node in an optical network featuring 96 wavelength channels per fiber and 50% drop (resp. add) capacity, namely 192 optical receivers (resp. transmitters), providing 4 receiver blocks (resp. transmitter blocks) of 48 transponders each gave rise to a far lower blocking ratio than providing 2 receiver blocks (resp. transmitter blocks) of 96 transponders each in heavy traffic conditions.

Elements such as the control units could be e.g. hardware means like e.g. an ASIC, or a combination of hardware and software means, e.g. an ASIC and an FPGA, or at least one microprocessor and at least one memory with software modules located therein.

The invention is not limited to the described embodiments. but by the appended claims.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A multidirectional optical drop device (30) for an optical network element (20, 60), comprising:
a first WDM drop link (34) connected to a first WDM input line (21) of the network element,
a first wavelength demultiplexer (33) comprising a WDM input connected to the first WDM drop link for inputting optical signals on a plurality of wavelength channels and a plurality of outputs, the first wavelength demultiplexer being adapted to selectively pass respective optical signals to respective outputs as a function of wavelength,
a first group of optical receivers (36, 37) respectively connected to a first subset of the outputs of the first wavelength demultiplexer,
a second WDM drop link (44) connected to a second WDM input line (21) of the network element,
a second wavelength demultiplexer (43) comprising a WDM input connected to the second WDM drop link for inputting optical signals on the plurality of wavelength channels and a plurality of outputs, the second wavelength demultiplexer being adapted to selectively pass respective optical signals to respective outputs as a function of wavelength,
a second group of optical receivers (46, 47) respectively connected to a first subset of the outputs of the second wavelength demultiplexer,
and means adapted to pass optical signals between a second subset (38) of the outputs of the first wavelength demultiplexer and the optical receivers (46) of the second group and adapted to pass optical signals between a second subset (48) of the outputs of the second wavelength demultiplexer and the optical receivers (36) of the first group,
wherein the first and second wavelength demultiplexers (33, 43) are programmable, wherein the first programmable wavelength demultiplexer (33) comprises a first fixed wavelength demultiplexer (6) having the WDM input and a first optical spatial switching matrix (3) having the plurality of outputs, wherein outputs of the first fixed wavelength demultiplexer are connected to inputs of the first optical spatial switching matrix (3), and the second programmable wavelength demultiplexer comprises a second fixed wavelength demultiplexer (6) having the WDM input and a second optical spatial switching matrix (3) having the plurality of outputs, wherein outputs of the second fixed wavelength demultiplexer are connected to inputs of the second optical spatial switching matrix, each of the first and second optical spatial switching matrices being adapted to produce a plurality of optical paths as a function of a configuration state,
wherein the inputs of the first optical spatial switching matrix comprise a first subset connected to the outputs of the first fixed wavelength demultiplexer and a second subset (91),
wherein the inputs of the second optical spatial switching matrix comprise a first subset connected to the outputs of the second fixed wavelength demultiplexer and a second subset (92) and
wherein the means are recirculation means comprising first recirculation lines (251) connecting the second subset of the outputs (238) of the first optical spatial switching matrix to the second subset of the inputs (92) of the second optical spatial switching matrix and second recirculation lines (252) connecting the second subset of the outputs (248) of the second optical spatial switching matrix to the second subset of the inputs (91) of the first optical spatial switching matrix.

2. A multidirectional optical drop device in accordance with claim 1 , wherein the recirculation means comprise an optical spatial switching matrix (50, 59) comprising a plurality of demultiplexer-side ports and a plurality of receiver-side ports, wherein the optical spatial switching matrix is adapted to produce a plurality of optical paths as a function of a configuration state, each optical path adapted to carry optical signals on the plurality of wavelength channels between a selected one of the demultiplexer-side ports and a selected one of the receiver-side ports,
a first subset of the demultiplexer-side ports being respectively connected (51) to the second subset (38) of the outputs of the first wavelength demultiplexer,
a second subset of the demultiplexer-side ports being respectively connected (52) to the second subset (48) of the outputs of the second wavelength demultiplexer,
a first subset of the receiver-side ports being respectively connected (53) to the optical receivers (36) of the first group,
a second subset of the receiver-side ports being respectively connected (54) to the optical receivers (46) of the second group,
wherein each optical receiver of the first and second groups is connected to a combining component (58) for combining an optical signal from the corresponding receiver-side port of the optical spatial switching matrix (50, 59) and an optical signal from the corresponding output of the first or second wavelength demultiplexer (33, 43).

3. A multidirectional optical drop device in accordance with claim 2, further comprising a third group of optical receivers (56) respectively connected to a third subset of the receiver-side ports of the optical spatial switching matrix(50, 59).

4. A multidirectional optical drop device in accordance with one of claims 1 to 3, further comprising a first programmable multiplexer (35) arranged between the first WDM drop link (34) and a plurality of WDM input lines (21) of the network element and a second programmable multiplexer (45) arranged between the second WDM drop link (44) and the plurality of WDM input lines of the network element, each programmable multiplexer being adapted to pass to the associated WDM drop link a plurality of optical signals from the plurality of WDM input lines on a selected plurality of wavelength channels.

5. A multidirectional optical drop device in accordance with one of claims 1 to 4, wherein the first WDM drop link (34) is arranged to receive the whole incoming traffic of the first WDM input line (21) of the network element (60) through a first power splitter (27) and the second WDM drop link (44) is arranged to receive the whole incoming traffic of the second WDM input line (21) of the network element (60) through a second power splitter (27).

6. A multidirectional optical drop device in accordance with one of claims 1 to 5, wherein a WDM drop link comprises a wideband optical amplifier (44) and a wavelength blocker module (65) arranged to equalize a power spectrum of the optical signals upstream of the optical amplifier.

7. A multidirectional optical add device (70) for an optical network element (20, 60), comprising:
a first WDM add link (134) connected to a first WDM output line (22) of the network element,
a first wavelength multiplexer (133) comprising a WDM output connected to the first WDM add link for outputting optical signals on a plurality of wavelength channels and a plurality of inputs, the first wavelength multiplexer being adapted to selectively pass respective optical signals from respective inputs as a function of wavelength,
a first group of optical transmitters (136, 137) respectively connected to a first subset of the inputs of the first wavelength multiplexer (133),
a second WDM add link (144) connected to a second WDM output line (22) of the network element,
a second wavelength multiplexer (143) comprising a WDM output connected to the second WDM add link for outputting optical signals on the plurality of wavelength channels and a plurality of inputs, the second wavelength multiplexer being adapted to selectively pass respective optical signals to respective inputs as a function of wavelength,
a second group of optical transmitters (146, 147) respectively connected to a first subset of the inputs of the second wavelength multiplexer (143),
and means adapted two pass optical signals between the optical transmitters (146) of the second group and a second subset (138) of the inputs of the first wavelength multiplexer and adapted to pass optical signals between the optical transmitters (136) of the first group a second subset (148) of the inputs of the second wavelength multiplexer,
wherein the first and second wavelength multiplexers (133, 143) are programmable, wherein the first programmable wavelength multiplexer comprises a first fixed wavelength multiplexer (6) having the WDM output and a first optical spatial switching matrix (3) having the plurality of inputs, wherein inputs of the first fixed wavelength multiplexer are connected to outputs of the first optical spatial switching matrix, and the second programmable wavelength multiplexer comprises a second fixed wavelength multiplexer (6) having the WDM output and a second optical spatial switching matrix (3) having the plurality of inputs, wherein inputs of the second fixed wavelength multiplexer are connected to outputs of the second optical spatial switching matrix, each of the first and second optical spatial switching matrices being adapted to produce a plurality of optical paths as a function of a configuration state,
wherein the outputs of the first optical spatial switching matrix comprise a first subset connected to the inputs of the first fixed wavelength multiplexer and a second subset (191),
wherein the outputs of the second optical spatial switching matrix comprise a first subset connected to the inputs of the second fixed wavelength multiplexer and a second subset (192) and
wherein the means are recirculation means comprising first recirculation lines (352) connecting the second subset (191) of the outputs of the first optical spatial switching matrix to the second subset of the inputs (348) of the second optical spatial switching matrix and second recirculation lines (351) connecting the second subset of the outputs (192) of the second optical spatial switching matrix to the second subset of the inputs (338) of the first optical spatial switching matrix.

8. A multidirectional optical add device in accordance with claim 7, wherein the recirculation means comprise an optical spatial switching matrix (150) comprising a plurality of multiplexer-side ports and a plurality of transmitter-side ports, wherein the optical spatial switching matrix is adapted to produce a plurality of optical paths as a function of a configuration state, each optical path adapted to carry optical signals on the plurality of wavelength channels between a selected one of the transmitter-side ports and a selected one of the multiplexer-side ports,
a first subset of the multiplexer-side ports being respectively connected (151) to the second subset (138) of the inputs of the first wavelength multiplexer,
a second subset of the multiplexer-side ports being respectively connected (152) to the second subset (148) of the inputs of the second wavelength multiplexer,
a first subset of the transmitter-side ports being respectively connected to the optical transmitters (136) of the first group,
a second subset of the transmitter-side ports being respectively connected to the optical transmitters (146) of the second group,
wherein each optical transmitter (136, 146) of the first and second groups is connected to a distributing component (158) for distributing an optical signal from the optical transmitter to the corresponding transmitter-side port of the optical spatial switching matrix (150) and the corresponding input of the first or second wavelength multiplexer (133, 143).

9. A multidirectional optical add device in accordance with claim 8, further comprising a third group of optical transmitters (156) respectively connected to a third subset of the transmitter-side ports of the optical spatial switching matrix (150).

10. A multidirectional optical add device in accordance with one of claims 8 to 9, further comprising a second optical spatial switching matrix (159) comprising a plurality of multiplexer-side ports and a plurality of transmitter-side ports respectively connected in the same manner as those of the first optical spatial switching matrix.

11. A multidirectional optical add device in accordance with one of claims 7 to 10, further comprising a first power splitter (135) arranged between the first WDM add link (134) and the plurality of WDM output lines (22) of the network element (20) and a second power splitter (145) arranged between the second WDM add link (144) and the plurality of WDM output lines of the network element.

## Patentansprüche

1. Multidirektionale optische Drop-Vorrichtung (30) für ein optisches Netzwerkelement (20, 60), umfassend:
Eine erste WDM-Drop-Verbindung (34), welcher an eine erste WDM-Eingangsleitung (21) des Netzwerkelements angeschlossen ist,
einen ersten Wellenlängen-Demultiplexer (33) mit einem an die erste WDM-Drop-Verbindung angeschlossenen WDM-Eingang für die Eingabe von optischen Signalen auf einer Vielzahl von Wellenlängenkanälen, und einer Vielzahl von Ausgängen, wobei der erste Wellenlängen-Demultiplexer für das selektive Leiten von jeweiligen optischen Signalen an jeweilige Ausgänge in Abhängigkeit von der Wellenlänge ausgelegt ist,
eine erste Gruppe von optischen Empfängern (36, 37), welche jeweils an einen ersten Teilsatz von Ausgängen des ersten Wellenlängen-Demultiplexers angeschlossen sind,
eine zweite WDM-Drop-Verbindung (44), welche an eine zweite WDM-Eingangsleitung (21) des Netzwerkelements angeschlossen ist,
einen zweiten Wellenlängen-Demultiplexer (43) mit einem an die zweite WDM-Drop-Verbindung angeschlossenen WDM-Eingang für die Eingabe von optischen Signalen auf der Vielzahl von Wellenlängenkanälen, und einer Vielzahl von Ausgängen, wobei der zweite Wellenlängen-Demultiplexer für das selektive Leiten von jeweiligen optischen Signalen an jeweilige Ausgänge in Abhängigkeit von der Wellenlänge ausgelegt ist,
eine zweite Gruppe von optischen Empfängern (46, 47), welche jeweils an einen ersten Teilsatz von Ausgängen des zweiten Wellenlängen-Demultiplexers angeschlossen sind,
und Mittel, welche dazu ausgelegt sind, optische Signale zwischen einem zweiten Teilsalz (38) der Ausgänge des ersten Wellenlängen-Demultiplexers und den optischen Empfängern (46) der zweiten Gruppe zu leiten, und dazu ausgelegt sind, optische Signale zwischen einem zweiten Teilsatz (48) der Ausgänge des zweiten Wellenlängen-Demultiplexers und den optischen Empfängern (36) der ersten Gruppe zu leiten,
wobei der erste und der zweiten Wellenlängen-Demultiplexer (33, 43) programmierbar sind, wobei der erste programmierbare Wellenlängen-Demultiplexer (33) einen ersten Demultiplexer mit fester Wellenlänge (6) mit dem WDM-Eingang und eine erste optische Raumschaltmatrix (3) mit der Vielzahl von Ausgängen umfasst,
wobei Ausgänge des ersten Demultiplexer mit fester Wellenlänge an Eingänge der ersten optischen Raumschaltmatrix (3) angeschlossen sind, und der zweite programmierbare Wellenlängen-Demultiplexer einen zweiten Demultiplexer mit fester Wellenlänge (6) mit dem WDM-Eingang und eine zweite optische Raumschaltmatrix (3) mit der Vielzahl von Ausgängen umfasst, wobei Ausgänge des zweiten Demultiplexers mit fester Wellenlänge an Eingang der zweiten optischen Raumschaltmatrix abgeschossen sind, wobei sowohl die erste als auch die zweite optische Raumschaltmatrix für das Herstellen einer Vielzahl von optischen Pfaden in Abhängigkeit eines Konfigurationszustands ausgelegt sind,
wobei die Eingänge der ersten optischen Raumschaltmatrix einen ersten Teilsatz, von Eingängen, welche an die Ausgänge des ersten Demultiplexer mit fester Wellenlänge abgeschlossen sind, und einen zweiten Teilsatz (91) umfassen,
wobei die Eingänge der zweiten optischen Raumschaltmatrix einen ersten Teilsatz, von Eingängen, welche an die Ausgänge des zweiten Demultiplexer mit fester Wellenlänge angeschlossen sind, und einen zweiten Teilsalz (92) umfassen, und
wobei die Mittel Rezirkulationsmittel mit ersten Rezirkulationsleitungen (251), welche den zweiten Teilsatz der Ausgänge (238) der ersten optischen Raumschaltmatrix mit dem zweiten Teilsatz der Eingänge (92) der zweiten optischen Raumschaltmatrix verbinden, und mit zweiten Rezirkulationsleitungen (252), welche den zweiten Teilsatz der Ausgänge (248) der zweiten optischen Raumschaltmatrix mit dem zweiten Teilsatz der Eingänge (91) der ersten optischen Raumschaltmatrix verbinden, sind.

2. Multidirektionale optische Drop-Vorrichtung nach Anspruch 1, wobei die Rezirkulationsmittel eine optische Raumschaltmatrix (50, 59) mit einer Vielzahl von demultiplexerseitigen Porks und einer Vielzahl von empfängerseitigen Ports umfassen, wobei die optische Raumschaltmatrix für das Herstellen einer Vielzahl von optischen Pfaden in Abhängigkeit von einem Konfigurationszustand ausgelegt ist, wobei jeder optische Pfad fähig ist, optische Signale auf der Vielzahl von Wellenlängenkanälen zwischen einem ausgewählten der demultiplexerseitigen Ports und einem ausgewählten der empfängerseitigen Ports zu transportieren,
wobei ein erster Teilsatz der demultiplexerseitigen Ports jeweils an den zweiten Teilsatz (38) der Ausgänge des ersten Wellenlängen-Demultiplexers angeschlossen (51) ist,
wobei ein zweiter Teilsatz der demultiplexerseitigen Ports jeweils an den zweiten Teilsatz (48) der Ausgänge des zweiten Wellenlängen-Demultiplexers angeschlossen (52) ist,
wobei ein erster Teilsatz der empfängerseitigen Ports jeweils an die optischen Empfänger (36) der ersten Gruppe angeschlossen (53) ist,
wobei ein zweiter Teilsatz der empfängerseitigen Ports jeweils an die optischen Empfänger (46) der zweiten Gruppe angeschlossen (54) ist,
wobei jeder optische Empfänger der ersten und der zweiten Gruppe an eine Kombinierungskomponente (58) angeschlossen ist, um ein optisches Signal von dem entsprechenden empfängerseitigen Port der optischen Raumschaltmatrix (50, 59) und ein optisches Signal von dem entsprechenden Ausgang des ersten oder zweiten Wellenlängen-Demultiplexers (33, 43) zu kombinieren.

3. Multidirektionale optische Drop-Vorrichtung nach Anspruch 2, weiterhin umfassend eine dritte Gruppe von optischen Empfängern (56), welche jeweils an einen dritten Teilsatz der empfängerseitigen Ports der optischen Raumschaltmatrix (50, 59) angeschlossen sind.

4. Multidirektionale optische Drop-Vorrichtung nach einem der Ansprüche 1 bis 3, weiterhin umfassend einen ersten programmierbaren Multiplexer (35), welcher zwischen der ersten WDM-Drop-Verbindung (34) und einer Vielzahl von WDM-Eingangsleitungen (21) des Netzwerkelements angeordnet ist, und einen zweiten programmierbaren Multiplexer (45), welcher zwischen der zweiten WDM-Drop-Verbindung (44) und der Vielzahl von WDM-Eingangsleitungen des Netzwerkelements angeordnet ist, wobei jeder programmierbare Multiplexer dazu ausgelegt ist, eine Vielzahl von optischen Signalen von der Vielzahl von WDM-Eingangsleitungen auf einer ausgewählten Vielzahl von Wellenlängenkanälen an die assoziierte WDM-Drop-Verbindung zu leiten.

5. Multidirektionale optische Drop-Vorrichtung nach einem der Ansprüche 1 bis 4, wobei die erste WDM-Drop-Verbindung (34) für den Empfang des gesamten eingehenden Verkehrs der ersten WDM-Eingangsleitung (21) des Netzwerkelements (60) über einen ersten Leistungsteiler (27) ausgelegt ist, und die zweite WDM-Drop-Verbindung (44) für den Empfang des gesamten eingehenden Verkehrs der zweiten WDM-Eingangsleitung (21) des Netzwerkelements (60) über einen zweiten Leistungsteiler (27) ausgelegt ist.

6. Multidirektionale optische Drop-Vorrichtung nach einem der Ansprüche 1 bis 5, wobei eine WDM-Drop-Verbindung einen optischen Breitbandverstärker (44) und ein Wellenlängenblocker-Modul (65), welches für das Entzerren eines Leistungsspektrums der optischen Signale stromaufwärts des optischen Verstärkers ausgelegt ist, umfasst.

7. Multidirektionale optische Add-Vorrichtung (70) für ein optisches Netzwerkelement (20, 60), umfassend:
Eine erste WDM-Add-Verbindung (134), welcher an eine erste WDM-Ausgangsleitung (22) des Netzwerkelements angeschlossen ist,
einen ersten Wellenlängen-Multiplexer (133) mit einem an die erste WDM-Add-Verbindung angeschlossenen WDM-Ausgang für die Ausgabe von optischen Signalen auf einer Vielzahl von Wellenlängenkanälen, und einer Vielzahl von Eingängen, wobei der erste Wellenlängen-Multiplexer für das selektive Leiten von jeweiligen optischen Signalen von jeweiligen Eingängen in Abhängigkeit von der Wellenlänge ausgelegt ist,
eine erste Gruppe von optischen Sendern (136, 137), welche jeweils an einen ersten Teilsatz von Eingängen des ersten Wellenlängen-Multiplexers (133) angeschlossen sind,
eine zweite WDM-Add-Verbindung (144), welche an eine zweite WDM-Ausgangsleitung (22) des Netzwerkelements angeschlossen ist,
einen zweiten Wellenlängen-Multiplexer (143) mit einem an die zweite WDM-Add-Verbindung angeschlossenen WDM-Ausgang für die Ausgabe von optischen Signalen auf der Vielzahl von Wellenlängenkanälen, und einer Vielzahl von Eingängen, wobei der zweite Wellenlängen-Multiplexer für das selektive Leiten von jeweiligen optischen Signalen an jeweilige Eingänge in Abhängigkeit von der Wellenlänge ausgelegt ist,
eine zweite Gruppe von optischen Sendern (146, 147), welcher jeweils an einen ersten Teilsatz der Eingänge des zweiten Wellenlängen-Multiplexers (143) angeschlossen sind,
und Mittel, welche dazu ausgelegt sind, optische Signale zwischen den optischen Sendern (146) der zweiten Gruppe und einem zweiten Teilsatz (138) der Eingänge des ersten Wellenlängen-Multiplexers zu leiten, und dazu ausgelegt sind, optische Signale zwischen den optischen Sendern (136) der ersten Gruppe und einem zweiten Teilsatz (148) der Eingänge des zweiten Wellenlängen-Multiplexers zu leiten,
wobei der erste und der zweiten Wellenlängen-Multiplexer 1(33, 143) programmierbar sind, wobei der erste programmierbare Wellenlängen-Multiplexer einen ersten Multiplexer mit fester Wellenlänge (6) mit dem WDM-Ausgang und eine erste optische Raumschaltmatrix (3) mit der Vielzahl von Eingängen umfasst, wobei Eingänge des ersten Multiplexer mit fester Wellenlänge an Ausgänge der ersten optischen Raumschaltmatrix angeschlossen sind, und der zweite programmierbare Wellenlängen-Multiplexer einen zweiten Multiplexer mit fester Wellenlänge (6) mit dem WDM-Ausgang und eine zweite optische Raumschaltmatrix (3) mit der Vielzahl von Eingängen umfasst,
wobei Eingänge des zweiten Multiplexers mit fester Wellenlänge an Ausgänge der zweiten optischen Raumschaltmatrix angeschlossen sind, wobei sowohl die erste als auch die zweite optische Raumschaltmatrix für das Herstellen einer Vielzahl von optischen Pfaden in Abhängigkeit eines Konfigurationszustands ausgelegt sind,
wobei die Ausgänge der ersten optischen Raumschaltmatrix einen ersten Teilsatz, von Ausgängen, welche an die Eingänge des ersten Multiplexer mit fester Wellenlänge angeschlossen sind, und einen zweiten Teilsatz (191) umfassen,
wobei die Ausgänge der zweiten optischen Raumschaltmatrix einen ersten Teilsatz, von Ausgängen, welcher an die Eingänge des zweiten Multiplexer mit fester Wellenlänge angeschlossen sind, und einen zweiten Teilsatz (192) umfassen, und
wobei die Mittel Rezirkulationsmittel mit ersten Rezirkulationsleitungen (352), welche den zweiten Teilsatz (191) der Ausgänge der ersten optischen Raumschaltmatrix mit dem zweiten Teilsatz der Eingänge (348) der zweiten optischen Raumschaltmatrix verbinden, und mit zweiten Rezirkulationsleitungen (351), welche den zweiten Teilsatz der Ausgänge (192) der zweiten optischen Raumschaltmatrix mit dem zweiten Teilsatz der Eingänge (338) der ersten optischen Raumschaltmatrix verbinden, sind.

8. Multidirektionale optische Add-Vorrichtung nach Anspruch 7, wobei die Rezirkulationsmittel eine optische Raumschaltmatrix (150) mit einer Vielzahl von multiplexerseitigen Ports und einer Vielzahl von senderseitigen Ports umfassen, wobei die optische Raumschaltmatrix für das Herstellen einer Vielzahl von optischen Pfaden in Abhängigkeit von einem Konfigurationszustand ausgelegt ist, wobei jeder optische Pfad fähig ist, optische Signale auf der Vielzahl von Wellenlängenkanälen zwischen einem ausgewählten der empfängerseitigen Ports und einem ausgewählten der multiplexerseitigen Ports zu transportieren,
wobei ein erster Teilsalz der multiplexerseitigen Ports jeweils an den zweiten Teilsatz (138) der Eingänge des ersten Wellenlängen-Multiplexers angeschlossen (151) ist,
wobei ein zweiter Teilsatz der multiplexerseitigen Ports jeweils an den zweiten Teilsatz (148) der Eingänge des zweiten Wellenlängen-Multiplexers angeschlossen (152) ist,
wobei ein erster Teilsatz der senderseitigen Ports jeweils an die optischen Sender (136) der ersten Gruppe angeschlossen ist,
wobei ein zweiter Teilsatz der senderseitigen Ports jeweils an die optischen Sender (146) der zweiten Gruppe angeschlossen ist,
wobei jeder optische Sender (136, 146) der ersten und der zweiten Gruppe an eine Verteilerkomponente (158) angeschlossen ist, um ein optisches Signal von dem optischen Sender an den entsprechenden senderseitigen Port der optischen Raumschaltmatrix (150) und dem entsprechenden Eingang des ersten oder zweiten Wellenlängen-Multiplexers (133, 143) zu verteilern,

9. Multidirektionale optische Add-Vorrichtung nach Anspruch 8, weiterhin umfassend eine dritte Gruppe von optischen Sendern (156), welche jeweils an einen dritten Teilsatz der senderseitigen Ports der optischen Raumschaltmatrix (150) angeschlossen sind.

10. Multidirektionale optische Add-Vorrichtung nach einem der Ansprüche 8 bis 9, weiterhin umfassend eine zweite optische Raumschaltmatrix (159) mit einer Vielzahl von multiplexerseitigen Ports und einer Vielzahl von senderseitigen Ports, welche jeweils in derselben Weise wie die der ersten optischen Raumschaltmatrix angeschlossen sind.

11. Multidirektionale optische Add-Vorrichtung nach einem der Ansprüche 7 bis 10, weiterhin umfassend einen ersten Leistungsteiler (135), welcher zwischen der ersten WDM-Add-Verbindung (134) und der Vielzahl von WDM-Ausgangsleitungen (22) des Netzwerkelements (20) angeordnet ist, und einen zweiten Leistungsteiler (145), welcher zwischen der zweiten WDM-Add-Verbindung (144) und der Vielzahl von WDM-Ausgangsleitungen des Netzwerkelements angeordnet ist.

## Revendications

1. Dispositif d'extraction optique multidirectionnel (30) pour un élément de réseau optique (20, 60), comprenant :
une première liaison d'extraction MRL (34) connectée à une première ligne d'entrée MRL (21) de l'élément de réseau,
un premier démultiplexeur de longueur d'onde (33) comprenant une entrée MRL connectée à la première liaison d'extraction MRL pour délivrer en entrée des signaux optiques sur une pluralité de canaux de longueur d'onde et une pluralité de sorties, le premier démultiplexeur de longueur d'onde étant adapté pour acheminer sélectivement des signaux optiques respectifs vers des sorties respectives en fonction de la longueur d'onde,
un premier groupe de récepteurs optiques (36, 37) respectivement connecté à un premier sous-ensemble des sorties du premier démultiplexeur de longueur d'onde,
une deuxième liaison d'extraction MRL (44) connectée à une deuxième ligne d'entrée MRL (21) de l'élément de réseau,
un deuxième démultiplexeur de longueur d'onde (43) comprenant une entrée MRL connectée à la deuxième liaison d'extraction MRL pour délivrer en entrée des signaux optiques sur la pluralité de canaux de longueur d'onde et une pluralité de sorties, le deuxième démultiplexeur de longueur d'onde étant adapté pour acheminer sélectivement des signaux optiques respectifs vers des sorties respectives en fonction de la longueur d'onde,
un deuxième groupe de récepteurs optiques (46, 47) respectivement connecté à un premier sous-ensemble des sorties du deuxième démultiplexeur de longueur d'onde,
et des moyens adaptés pour acheminer des signaux optiques entre un deuxième sous-ensemble (38) des sorties du premier démultiplexeur de longueur d'onde et les récepteurs optiques (46) du deuxième groupe et adaptés pour acheminer des signaux optiques entre un deuxième sous-ensemble (48) des sorties du deuxième démultiplexeur de longueur d'onde et les récepteurs optiques (36) du premier groupe,
dans lequel les premier et deuxième démultiplexeurs de longueur d'onde (33, 43) sont programmables, le premier démultiplexeur de longueur d'onde programmable (33) comprenant un premier démultiplexeur de longueur d'onde fixe (6) présentant l'entrée MRL et une première matrice de commutation spatiale optique (3) présentant la pluralité de sorties, des sorties du premier démultiplexeur de longueur d'onde fixe étant connectées à des entrées de la première matrice de commutation spatiale optique (3), et le deuxième démultiplexeur de longueur d'onde programmable comprenant un deuxième démultiplexeur de longueur d'onde fixe (6) présentant l'entrée MRL et une deuxième matrice de commutation spatiale optique (3) présentant la pluralité de sorties, des sorties du deuxième démultiplexeur de longueur d'onde fixe étant connectées à des entrées de la deuxième matrice de commutation spatiale optique, chacune des première et deuxième matrices de commutation spatiale optique étant adaptée pour produire une pluralité de trajets optiques en fonction d'un état de configuration,
les entrées de la première matrice de commutation spatiale optique comprenant un premier sous-ensemble connecté aux sorties du premier démultiplexeur de longueur d'onde fixe et un deuxième sous-ensemble (91),
dans lequel les entrées de la deuxième matrice de commutation spatiale optique comprennent un premier sous-ensemble connecté aux sorties du deuxième démultiplexeur de longueur d'onde fixe et un deuxième sous-ensemble (92) et
dans lequel les moyens sont des moyens de recirculation comprenant des premières lignes de recirculation (251) connectant le deuxième sous-ensemble des sorties (238) de la première matrice de commutation spatiale optique au deuxième sous-ensemble des entrées (92) de la deuxième matrice de commutation spatiale optique et des deuxièmes lignes de recirculation (252) connectant le deuxième sous-ensemble des sorties (248) de la deuxième matrice de commutation spatiale optique au deuxième sous-ensemble des entrées (91) de la première matrice de commutation spatiale optique.

2. Dispositif d'extraction optique multidirectionnel selon la revendication 1, dans lequel les moyens de recirculation comprennent une matrice de commutation spatiale optique (50, 59) comprenant une pluralité de ports côté démultiplexeur et une pluralité de ports côté récepteur, la matrice de commutation spatiale optique étant adaptée pour produire une pluralité de trajets optiques en fonction d'un état de configuration, chaque trajet optique étant adapté pour acheminer des signaux optiques sur la pluralité de canaux de longueur d'onde entre un port sélectionné parmi les ports côté démultiplexeur et un port sélectionné parmi les ports côté récepteur,
un premier sous-ensemble des ports côté démultiplexeur étant respectivement connecté (51) au deuxième sous-ensemble (38) des sorties du premier démultiplexeur de longueur d'onde,
un deuxième sous-ensemble des ports côté démultiplexeur étant respectivement connecté (52) au deuxième sous-ensemble (48) des sorties du deuxième démultiplexeur de longueur d'onde,
un premier sous-ensemble des ports côté récepteur étant respectivement connecté (53) aux récepteurs optiques (36) du premier groupe,
un deuxième sous-ensemble des ports côté récepteur étant respectivement connecté (54) aux récepteurs optiques (46) du deuxième groupe,
chaque récepteur optique des premier et deuxième groupes étant connecté à un élément de combinaison (58) pour combiner un signal optique du port côté récepteur correspondant de la matrice de commutation spatiale optique (50, 59) et un signal optiques de la sortie correspondante du premier ou du deuxième démultiplexeur de longueur d'onde (33, 43).

3. Dispositif d'extraction optique multidirectionnel selon la revendication 2, comprenant en outre un troisième groupe de récepteurs optiques (56) respectivement connecté à un troisième sous-ensemble des ports côté récepteur de la matrice de commutation spatiale optique (50, 59).

4. Dispositif d'extraction optique multidirectionnel selon l'une des revendications 1 à 3, comprenant en outre un premier multiplexeur programmable (35) disposé entre la première liaison d'extraction MRL (34) et une pluralité de lignes d'entrée MRL (21) de l'élément de réseau et un deuxième multiplexer programmable (45) disposé entre la deuxième liaison d'extraction MRL (44) et la pluralité de lignes d'entrée MRL de l'élément de réseau, chaque multiplexeur programmable étant adapté pour acheminer vers la liaison d'extraction MRL associée une pluralité de signaux optiques à partir de la pluralité de lignes d'entrée MRL sur une pluralité sélectionnée de canaux de longueur d'onde.

5. Dispositif d'extraction optique multidirectionnel selon l'une des revendications 1 à 4, dans lequel la première liaison d'extraction MRL (34) est conçue pour recevoir l'ensemble du trafic entrant de la première ligne d'entrée MRL (21) de l'élément de réseau (60) à travers un premier diviseur de puissance (27) et la deuxième liaison d'extraction MRL (44) est conçue pour recevoir l'ensemble du trafic entrant de la deuxième ligne d'entrée MRL (21) de l'élément de réseau (60) à travers un deuxième diviseur de puissance (27).

6. Dispositif d'extraction optique multidirectionnel selon l'une des revendications 1 à 5, dans lequel une liaison d'extraction MRL comprend un amplificateur optique à large bande (44) et un module de blocage de longueur d'onde (65) conçu pour égaliser un spectre de puissance des signaux optiques en amont de l'amplificateur optique.

7. Dispositif d'insertion optique multidirectionnel (70) pour un élément de réseau optique (20, 60), comprenant :
une première liaison d'insertion MRL (134) connectée à une première ligne de sortie MRL (22) de l'élément de réseau,
un premier multiplexeur de longueur d'onde (133) comprenant une sortie MRL connectée à la première liaison d'insertion MRL pour délivrer en sortie des signaux optiques sur une pluralité de canaux de longueur d'onde et une pluralité d'entrées, le premier multiplexeur de longueur d'onde étant adapté pour acheminer sélectivement des signaux optiques respectifs à partir des entrées respectives en fonction de la longueur d'onde,
un premier groupe d'émetteurs optiques (136, 137) respectivement connecté à un premier sous-ensemble des entrées du premier multiplexeur de longueur d'onde (133),
une deuxième liaison d'insertion MRL (144) connectée à une deuxième ligne de sortie MRL (22) de l'élément de réseau,
un deuxième multiplexeur de longueur d'onde (143) comprenant une sortie MRL connectée à la deuxième liaison d'insertion MRL pour délivrer en sortie des signaux optiques sur la pluralité de canaux de longueur d'onde et une pluralité d'entrées, le deuxième multiplexeur de longueur d'onde étant adapté pour acheminer sélectivement des signaux optiques respectifs vers des entrées respectives en fonction de la longueur d'onde,
un deuxième groupe d'émetteurs optiques (146, 147) respectivement connecté à un premier sous-ensemble des entrées du deuxième multiplexeur de longueur d'onde (143),
et des moyens adaptés pour acheminer des signaux optiques entre les émetteurs optiques (146) du deuxième groupe et un deuxième sous-ensemble (138) des entrées du premier multiplexeur de longueur d'onde et adaptés pour acheminer des signaux optiques entre les émetteurs optiques (136) du premier groupe d'un deuxième sous-ensemble (148) des entrées du deuxième multiplexeur de longueur d'onde,
dans lequel les premier et deuxième multiplexeurs de longueur d'onde (133, 143) sont programmables, le premier multîplexeur de longueur d'onde programmable comprenant un premier multiplexeur de longueur d'onde fixe (6) présentant la sortie MRL et une première matrice de commutation spatiale optique (3) présentant la pluralité d'entrées, des entrées du premier multiplexeur de longueur d'onde fixe étant connectées à des sorties de la première matrice de commutation spatiale optique, et le deuxième multiplexeur de longueur d'onde programmable comprenant un deuxième multiplexer de longueur d'onde fixe (6) présentant la sortie MRL et une deuxième matrice de commutation spatiale optique (3) présentant la pluralité d'entrées, des entrées du deuxième multiplexeur de longueur d'onde fixe étant connectées à des sorties de la deuxième matrice de commutation spatiale optique, chacune des première et deuxième matrices de commutation spatiale optique étant adaptée pour produire une pluralité de trajets optiques en fonction d'un état de configuration,
dans lequel les sorties de la première matrice de commutation spatiale optique comprennent un premier sous-ensemble connecté aux entrées du premier multiplexeur de longueur d'onde fixe et un deuxième sous-ensemble (191),
dans lequel les sorties de la deuxième matrice de commutation spatiale optique comprennent un premier sous-ensemble connecté aux entrées du deuxième multiplexeur de longueur d'onde fixe et un deuxième sous-ensemble (192) et
dans lequel les moyens sont des moyens de recirculation comprenant des premières lignes de recirculation (352) connectant le deuxième sous-ensemble (191) des sorties de la première matrice de commutation spatiale optique au deuxième sous-ensemble des entrées (348) de la deuxième matrice de commutation spatiale optique et des deuxièmes lignes de recirculation (351) connectant le deuxième sous-ensemble des sorties (192) de la deuxième matrice de commutation spatiale optique au deuxième sous-ensemble des entrées (338) de la première matrice de commutation spatiale optique.

8. Dispositif d'insertion optique multidirectionnel selon la revendication 7, dans lequel les moyens de recirculation comprennent une matrice de commutation spatiale optique (150) comprenant une pluralité de ports côté multiplexeur et une pluralité de ports côté émetteur, la matrice de commutation spatiale optique étant adaptée pour produire une pluralité de trajets optiques en fonction d'un état de configuration, chaque trajet optique étant adapté pour acheminer des signaux optiques sur la pluralité de canaux de longueur d'onde entre un port sélectionné parmi les ports côté émetteur et un port sélectionné parmi les ports côté multiplexeur,
un premier sous-ensemble des ports côté multiplexeur étant respectivement connecté (151) au deuxième sous-ensemble (138) des entrées du premier multiplexeur de longueur d'onde,
un deuxième sous-ensemble des ports côté multiplexeur étant respectivement connecté (152) au deuxième sous-ensemble (148) des entrées du deuxième multiplexeur de longueur d'onde,
un premier sous-ensemble des ports côté émetteur étant respectivement connecté aux émetteurs optiques (136) du premier groupe,
un deuxième sous-ensemble des ports côté émetteur étant respectivement connecté aux émetteurs optiques (146) du deuxième groupe,
dans lequel chaque émetteur optique (136, 146) des premier et deuxième groupes est connecté à un élément de distribution (158) pour distribuer un signal optique depuis l'émetteur optique vers le port côté émetteur correspondant de la matrice de commutation spatiale optique (150) et de l'entrée correspondante du premier ou du deuxième multiplexeur de longueur d'onde (133, 143).

9. Dispositif d'insertion optique multidirectionnel selon la revendication 8, comprenant en outre un troisième groupe d'émetteurs optiques (156) respectivement connecté à un troisième sous-ensemble des ports côté émetteur de la matrice de commutation spatiale optique (150).

10. Dispositif d'insertion optique multidirectionnel selon l'une des revendications 8 à 9, comprenant en outre une deuxième matrice de commutation spatiale optique (159) comprenant une pluralité de ports côté multiplexeur et une pluralité de ports côté émetteur respectivement connectés de la même manière que ceux de la première matrice de commutation spatiale optique.

11. Dispositif d'insertion optique multidirectionnel selon l'une des revendications 7 à 10, comprenant en outre un premier diviseur de puissance (135) disposé entre la première liaison d'insertion MRL (134) et la pluralité de lignes de sortie MRL (22) de l'élément de réseau (20) et un deuxième diviseur de puissance (145) disposé entre la deuxième liaison d'insertion MRL (144) et la pluralité de lignes de sortie MRL de l'élément de réseau.
